# EUROPEAN PATENT APPLICATION

(11) **EP 4 841 467 A1**
(43) Date of publication of application: **18.11.2026**
(21) Application number: 25816186.8
(22) Date of filing: 28.04.2025
(51) Int. Cl.: G06F 16/3329, G06F 16/338, G06F 16/3332, G06F 16/31, G06F 16/84, G10L 15/26

(54) **METHOD AND DEVICE FOR DETERMINING ADDRESS FROM TEXT EXTRACTED FROM VOICE**

(30) Priority: 27.05.2024 KR 20240068920
(71) Applicant: Sujiewon, Seoul 07299 (KR)
(72) Inventor: JEONG, Yeon Il, Seoul 04775 (KR)
(74) Representative: BCKIP Part mbB
(86) International application number: PCT/KR2025/005729
(87) International publication number: WO 2025/249772

(57) **Abstract**

The method of the present invention comprises: a first step of separating a text into one or more target strings based on a specific delimiter; a second step of selectively mapping each of the separated one or more target strings to an address value of a corresponding address component in a pre-specified address member set according to results of searching a plurality of field databases, each composed of a set of address values corresponding to one of a plurality of address components; and a third step of, when an arbitrary target string is mapped to an address value in the second step, searching one or more address values currently mapped to the address member set in an address database, and determining, based on the search result, that the one or more address values correspond to complete information of a single address.

## Description

### BACKGROUND

### Field

The present invention relates to a technology for determining standard address information from text extracted from personal voice, particularly during the process of conversation with artificial intelligence (AI).

### Description of the Related Art

Numerous services based on advanced technologies are being provided in commercial and public sectors, and members of society are enjoying the resulting benefits of those services. However, as the types of services offered are becoming highly diverse and specialized, requiring knowledge to utilize those services, persons face difficulties in freely using them.

Therefore, companies and public institutions providing services operate call centers staffed with a large number of agents to resolve persons' difficulties, and are addressing them through these call centers.

Meanwhile, as AI technology advances, generative AI is now demonstrating capabilities similar to human creative abilities. Consequently, the industrial sector is utilizing this generative AI to pursue automation in areas that were previously impossible, and call centers, which respond to and resolve users' inquiries and issues, are one such field targeted for automation through the application of generative AI.

However, when companies or other institutions intend to implement such automation, or achieve some cost savings through already applied automation, they must or are accepting the disadvantage that the information required to be obtained during the AI response process becomes incomplete. This problem is particularly prominent in the process of obtaining address information from users making inquiries or presenting issues.

When a person naturally states their address during a conversation, they may habitually add filler words or repeat words in addition to the relevant information, or even mention in partially reverse order of hierarchical address. However, AI merely understands information in the form of text extracted from the other party's voice (hereinafter referred to as "voice text"), and is unable to determine the administrative address (hereinafter referred to as "official address"), which is set as a standard by the social system, from the voice text containing that address information.

The following text-formatted information are examples of voice text regarding addresses provided by users during inquiries or consultations with AI.

"You have to do it this way Jeonbuk Gunsansi Susongro sipsam..."

"Yes Chungnam Seosansi Just a moment Miss Chungnam Seosansi Buchunilro ..."

In the process of automatically converting address information obtained from various conventional expression manners into a standard official address, voice texts, which contains filler words and/or repeated words or phrases such as "You have to do it this way" "Yes" "Just a moment" and "Miss" obtained as in these examples (hereinafter, filler words or repeated words or phrases included in voice text that do not correspond to address components (''City/Province', ''City/County/District', 'Eup/Myeon/Dong', 'Ri', 'Adress Number', 'Building/Complex Name', 'Building/Complex Number', 'Building/Floor/Unit', etc.) constituting an official address are collectively referred to as "non-address noise" (NAN).),, are not mapped to elements of an official address and remain as an error address. In order to register such error addresses in the users' address database, a person in charge must separately check the voice text to identify the exact address contained in that voice text. Consequently, personnel are still required to determine the address from the voice text, making it difficult to achieve complete automation of call center operations.

Therefore, it is necessary to reduce the number of erroneous addresses that cannot be identified as official addresses by improving the method of determining official addresses from address-related text extracted from the voice of a person conversing with AI.

### SUMMARY OF THE INVENTION

One objective of the present invention is to provide a method and device for determining an official address from text extracted from human voice using a refined address database.

Another objective of the present invention is to provide a method and device for determining a corresponding official address while receiving address-related text extracted from human voice in real time.

Another objective of the present invention is to provide an address determination method and device that improve the efficiency of identifying official addresses from text containing various and unpredictable NAN extracted from human voice.

Another objective of the present invention is to provide an address determination method and device capable of correcting wrong information regarding some address components in address-related text extracted from human voice.

Another objective of the present invention is to provide an address determination method and device for accurately converting phonetic characters corresponding to numbers or alphabets, etc., for components of an official address into corresponding codes, with respect to text extracted from human voice.

The scope of the present invention is not necessarily limited to the above explicit statements. Rather, the scope of the present invention covers anything to accomplish effects that could be derived from the specific and illustrative explanations of the present invention below.

A method for determining address information by receiving information of a text as input according to an aspect of the present invention, comprises: a first step of separating the text into one or more target strings based on a specific delimiter; a second step of selectively mapping each of the separated one or more target strings to an address value of a corresponding address component in a pre-specified address member set according to results of searching a plurality of field databases, each composed of a set of address values corresponding to one of a plurality of address components; and a third step of, when an arbitrary target string is mapped to an address value in the second step, searching one or more address values currently mapped to the address member set in an address database, and determining, based on the search result, that the one or more address values correspond to complete information of a single address.

In one embodiment according to the present invention, the third step proceeds to the first step if it is determined that the one or more address values do not correspond to complete information of a single address, or is performed again if another target string following the arbitrary target string is mapped to an address value in the second step.

In one embodiment according to the present invention, the second step selectively maps the one or more target strings to address values of a plurality of corresponding address components when a single target string among the one or more target strings partially matches a first entry registered in one of the plurality of field databases. In particular, the second step maps the single target string to address values of corresponding multiple address components when a remaining string, excluding a part of the single target string that partially matches the first entry, matches at least partially with a second entry registered in another field database among the plurality of field databases. Specially, the second step may map the single target string to address values of a plurality of corresponding address components when all of address records, among address record set in the address database having a field value for a first address field corresponding to an entry of higher-level in address system in both of the first and second entries, have the same field value for every address field between the first and a second address field, wherein the address records have a field value for the second address field corresponding to an entry of lower-level in address system in the both entries. Furthermore, the second step may use a part of the remaining string, excluding another part thereof, for mapping to address values of the multiple address components, when the another part matches the second entry itself, or the second entry of which number or alphabet has been replaced with phonetic characters thereof.

In one embodiment according to the present invention, the second step discards a single target string among the one or more targets without mapping to an address value, if at least one syllable mismatched in an entry is designated as mandatory for the entry when the single target string partially matches the entry registered in one of the plurality of field databases.

In one embodiment according to the present invention, the second step discards a single string among the one or more target strings without using it for mapping to an address value when the single string matches a non-address word listed in a pre-set list.

In one embodiment according to the present invention, the second step selectively changes phonetic characters for a number included in a single target string among the one or more target strings into a number based on attribute information preassigned to a syllable of a specific entry in a specific field database that is being compared with the single target string, and maps the changed number to an address value of an address component corresponding to the single target string.

In one embodiment according to the present invention, the second step selectively changes phonetic characters for a number included in a single target string among the one or more target strings into a number based on attribute information preassigned to a last syllable of a specific entry in a specific field database with which a target string immediately preceding the single target string is matched, and maps the changed number to an address value of an address component corresponding to the single target string.

In one embodiment according to the present invention, the third step determines that one or more address values currently mapped to the address member set correspond to address information of one address record when only the one address record among address records registered in the address database contains all of the one or more address values.

In one embodiment according to the present invention, the third step automatically maps a mutually identical field value for one or more address fields to an address value of a corresponding address component in the address member set, when a first and a second field value, which respectively match a first and a second address value included in the one or more address values currently mapped for the address member set, for a first and a second address field of different address levels with one or more address fields in between exist in the address database, and all address records having the first and second field values for the first and second address fields have the mutually identical field value for each of the one or more address fields. In addition, the third step automatically maps a mutually identical field value for at least one address field to an address value of a corresponding address component in the address member set, when a specific field value, which matches an address value of highest address level among the one or more address values currently mapped for the address component set, for an arbitrary address field not corresponding to top address level exist in the address database, and all address records having the specific field value for the arbitrary address field have the mutually identical field value for each of the at least one address field of an address level higher than the arbitrary address field.

In one embodiment according to the present invention, the third step additionally searches for a first address value in a specific range determined based on an upper address field higher than a specific address field in terms of address level if the first address value being searched is for a specific address component and is not found in the specific address field corresponding to the specific address component, when searching the address database for the one or more address values. The specific address component includes an address component corresponding to a 'Building/Complex Name' in address system. The third step may change at least one address value, among the one or more address values, whose address level is higher than that of the first address value when the first address value is found in the additional search.

In one embodiment according to the present invention, the third step checks whether a first address value matches the field value of which the number or the alphabet is replaced by phonetic characters of the number or the alphabet, if a field value recorded in an address field within a specific range contains a number or an alphabet when searching the address field within the specific range in the address database for the first address value included in the one or more address values.

In the above embodiments, the specific range may be a section of the address database specified by address records in which a field value identical to an address value, among the one or more address values, of an address level higher than that of the first address value is recorded in an address field.

In one embodiment according to the present invention, the third step does not perform an operation of searching the address database for the one or more address values, if an address value corresponding to a predetermined address component among address components defined by address system is not included in the one or more address values when the arbitrary target string is mapped to an address value. In this case, the predetermined address component may include at least one of address components corresponding to 'Street Name', 'Building/Complex Name', and 'Address Number' defined by the address system.

In one embodiment according to the present invention, the method comprises a step of transmitting the one or more address values that are determined to correspond to complete address information to another device other than a device performing the method, wherein the text is received via communication from the another device.

A device for determining address information by receiving information of a text as input according to another aspect of the present invention, comprises: a first processing unit configured to separate the text into one or more target strings based on a specific delimiter; a second processing unit configured to selectively map each of the separated one or more target strings to an address value of a corresponding address component in a pre-specified address member set according to results of searching a plurality of field databases, each composed of a set of address values corresponding to one of a plurality of address components; and a main processing unit configured to, when an arbitrary target string is mapped to an address value by the second processing unit, search one or more address values currently mapped to the address member set in an address database, and to determine, based on the search result, that one or more address values correspond to complete information of a single address.

In the method, device, and various embodiments, each of the plurality of field databases may be configured such that all address information nationwide assigned to a corresponding address component is sorted in alphabetical order without duplication. In addition, the text may be extracted from voice of a conversation taking place on electrical communication.

A method for determining an address from text extracted from voice according to the present invention described above or at least one embodiment of the present invention described below together with the attached drawings accurately extracts a standardized official address from address-related text, which includes address information obtained during the process of an AI consulting with a user, containing various types of NANs that may be inserted during a conversation, and significantly increases the efficiency of extracting the official address compared to a general address conversion method applied to standardize various formats of addresses conventionally used, which do not contain any NAN, into official addresses.

In addition, through a refined address database, even address-related text containing address information provided wrongly by a user can be corrected to accurate address information by utilizing information for address component that is less prone to errors in human memory, and a complete official address can also be extracted from address-related voice text containing only information about a part of the official address.

Therefore, by applying the present invention, the personnel required to identify corresponding official addresses from texts extracted from voice or texts that cause mapping errors in existing standard address conversion methods can be significantly reduced. As a result, companies can remarkably lower the cost of operating and maintaining call centers.

### BRIEF DESCRIPTION OF THE DRAWINGS

FIG. 1 is a block diagram illustrating the configuration of a device for performing a method of determining an address from voice text according to an embodiment of the present invention;
FIG. 2 illustrates a method in which voice text may be applied as input to the device of FIG. 1;
FIG. 3 shows an example in which, for strings of voice text, some strings that do not correspond to address components are removed based on a preset filtering list and are then output, according to an embodiment of the present invention;
FIG. 4 schematically illustrates a process of selecting a corresponding address component for each string of voice text through a query of a field database constructed for each address component according to an embodiment of the present invention;
FIG. 5 is a flowchart exemplarily showing a method for selecting an input string as a corresponding address component according to an embodiment of the present invention;
FIG. 6 illustrates the structure of a matching table in which all address components constituting an official address are individual members for writing a string determined as an address component, according to an embodiment of the present invention;
FIG. 7 illustrates an example in which attribute information is pre-set for each syllable element of each entry in a field database constructed for each address component, according to an embodiment of the present invention;
FIG. 8 schematically illustrates an example of a method for processing input strings that may correspond to a plurality of address components, according to an embodiment of the present invention;
FIG. 9 schematically illustrates an example of a method for determining an address component corresponding to an input string that partially matches an entry in one of field databases constructed individually for each address component, according to an embodiment of the present invention;
FIG. 10 schematically illustrates, along with the schematic structure of the refined address database, a method of searching for additional address information and input strings that were not confirmed as address component because they partially matched an entry in the field database in the method exemplified in FIG. 9;
FIG. 11 is an example schematically showing a method for correcting phonetic characters for alphabets, etc., to alphabets, etc., that are used in address components, according to an embodiment of the present invention;
FIG. 12 schematically illustrates the process of verifying, through a search of the refined address database, whether address information written in a matching table forms a complete official address, according to an embodiment of the present invention;
FIG. 13 schematically illustrates an example in which, when the value for any address member in a matching table corresponds to an address field in the refined address database, the values for address members of the upper address level are automatically determined based on the corresponding branch in the database, according to an embodiment of the present invention; and
FIG. 14 is a diagram illustrating an exemplary method of searching a corresponding address field for the value of an address component, targeting a range outside the lower address zone determined by a branch determined in the refined address database, in the case of a specific address component, according to one embodiment of the present invention.

### DETAILED DESCRIPTION

In what follows, embodiments of the present invention will be described in detail with reference to appended drawings.

In the following description of the embodiments of the present invention and the accompanying drawings, the same reference numerals or symbols designate the same elements unless otherwise specified. Of course, for convenience of explanation and for the sake of understanding, the same components may be indicated by different reference numbers or symbols if necessary.

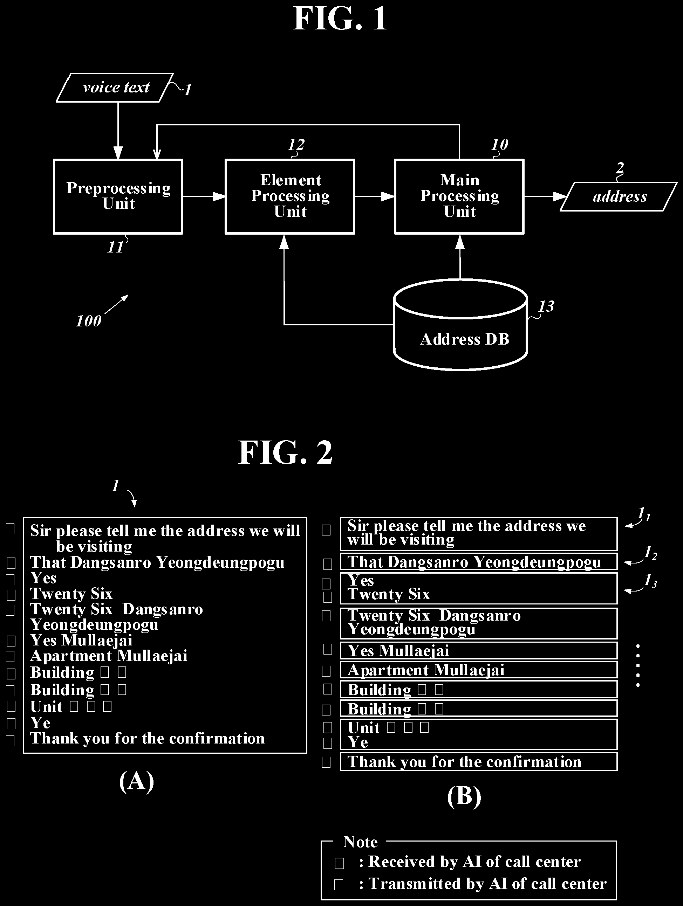

FIG. 1 is a block diagram illustrating the configuration of a voice text address processing device 100 that performs a method for determining an address from voice text according to an embodiment of the present invention, comprising: a preprocessing unit 11 that removes pre-defined NANs from an input of voice text 1; an element processing unit 12 that selects phrases, etc. corresponding to address components from the preprocessed text and maps them to the address value of the component (This address value refers to partial information of an complete official address and corresponds to an address component. It is also abbreviated as 'value' below); and a main processing unit 10 that, for address components where the information of a relevant address component is mapped by the element processing unit 12, checks whether the address is complete through referring to a refined address database (RAD) 13, and determines and outputs the corresponding official address 2.

Each component of the voice-text address processing device 100 exemplified in FIG. 1, or a partial combination thereof may be configured as hardware that executes software or firmware, or as an application program to be executed on a computing device together with one or more databases referenced by the program. In this case, the application program and databases may be stored on a recording medium and be then transmitted to a device, or transmitted between devices by communication through a network. Additionally, the device exemplified in FIG. 1 may be configured as a single integrated server, or may be configured in a distributed form among multiple servers communicating with each other through an internal communication network.

Additionally, the voice text address processing device 100 may further include a communication unit that exchanges information with another server according to a given communication method. In an embodiment of a device configured in this way, the input voice text may be provided from another server and applied to the preprocessing unit 11 by the communication unit, and when the main processing unit 10 determines an official address, it may immediately transmit the official address to the server that transmitted the voice text or to another designated server through the communication unit.

The voice text 1 input to the device of FIG. 1 may include phrases corresponding to all address components forming a single official address, or it may include only phrases corresponding to some address components. In the latter case, one or more voice texts including phrases corresponding to other address components may be input consecutively. FIG. 2 illustrates a method of inputting such voice text that is applied to the device of FIG. 1, wherein (A) shows an example of a method in which phrases and/or words for address components determinable as an official address are all input at once, and (B) shows an example of a method in which those for address components are distributed among multiple voice texts 1ᵢ, (i=1,2,3,..) and input sequentially.

In addition, voice text may be all (entire content from the beginning to the end of a consultation or inquiry) or part of a conversation between a person and AI, as exemplified, or, alternatively, all or part of text limited to the voice spoken by a person speaking to AI in a unilateral rather than conversational manner.

Regardless of whether voice text is input in the manner of (A) or (B) of FIG. 2, the voice text address processing device 100 applies the same method of dividing the input text into phrases or words based on spaces and processing each divided phrase or word (hereinafter referred to as 'target string') sequentially according to the order on the voice text, so there is no difference in the address determination method of the present invention irrespective of the input manner of the voice text. Therefore, in the following description, the term of 'voice text' is used in a sense that encompasses the text 1 exemplified in (A) of FIG. 2 and the text 1ᵢ exemplified in (B) of FIG. 2.

In this specification and claims, the term 'string' is used to encompass not only a 'phrase' in the dictionary sense but also a single syllable, a word, an unspaced phrase, and compound words formed by combining two or more words.

The technical concept and principle of the present invention do not require that each string obtained from a voice text be processed in the order within the text. Processing each string obtained from the voice text in that order is merely one embodiment, and even if target strings are processed regardless of that order, when a minimum number of target strings determinable as a single official address are input, the corresponding official address can be determined regardless of the input order. Therefore, unless explicitly excluded in the claims of the present invention, it should be understood that the scope of the rights of the present invention is not excluded on the grounds that the processing order of the phrases or words constituting the voice text is non-sequential.

Hereinafter, a method for determining an address from voice text according to an embodiment of the present invention, which is performed by the voice text address processing device (100), will be described in detail.

The preprocessing unit 11 first removes NANs from the input voice text 1. To this end, the preprocessing unit 11 is provided with a filtering list that contains pre-registered filler words, idioms, or common phrases that people commonly use regardless of address information when speaking their addresses. For example, this filtering list includes words or phrases such as "that" "yes" "ye" "ah" "um" "maybe" and "it is".

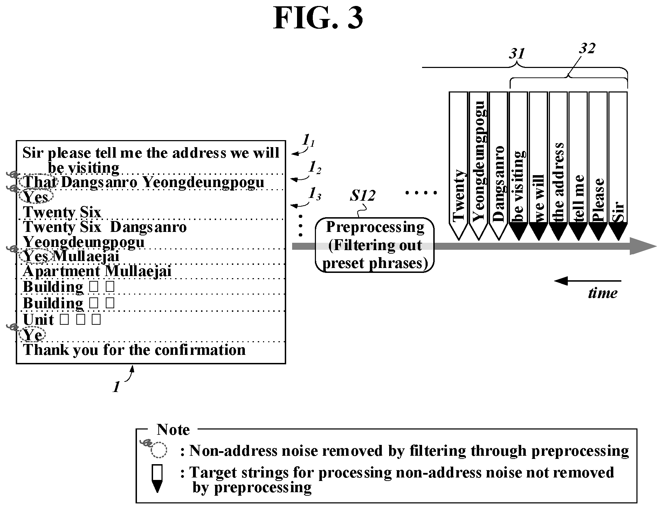

FIG. 3 shows an example in which target strings 31 from which NANs have been removed are output, through the preprocessing (S12) in which the preprocessing unit 11 selectively outputs strings based on a filtering list, for words, phrases, etc. of the voice text 1 or 1ᵢ (i=1,2,3..) exemplified in FIG. 2. Since it is not possible to anticipate and list all the numerous vocabulary words that may appear or be expressed in the relevant situation, or in the speech or conversation habits of a person inquiring or consulting with a call center, etc., the target strings 31 output by the preprocessing unit 11 may include, as exemplified, target strings 32 corresponding to NANs that are not listed in the filtering list of the preprocessing unit 11.

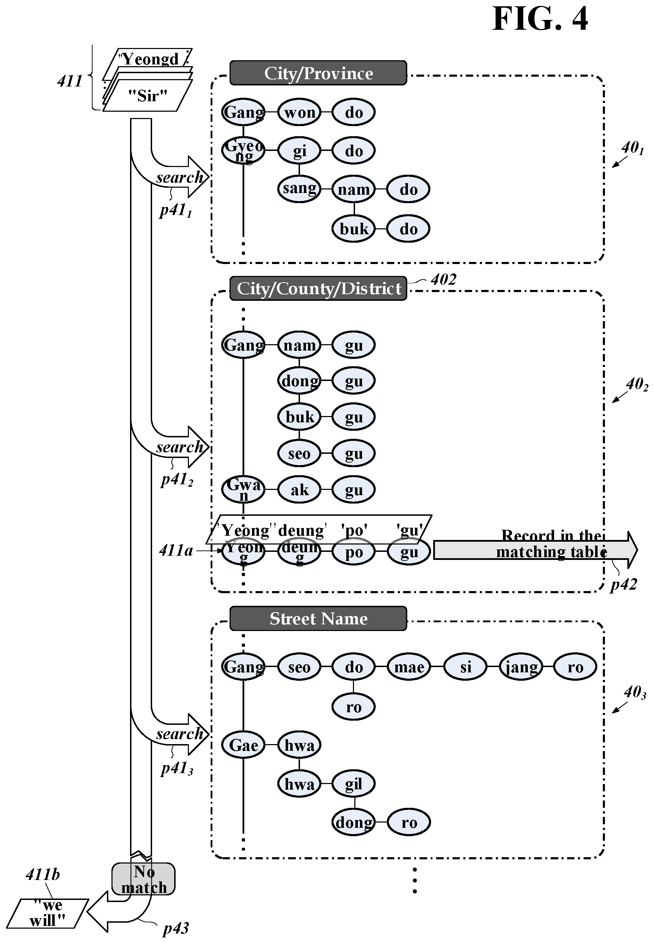

Target strings 31 output after filtering by the preprocessing unit 11 are input into the element processing unit 12, and the element processing unit 12 checks whether each target string is a string corresponding to an address component by querying a pre-stored database built for each address component, more specifically, a database built by sequentially listing a set of address values corresponding to each of a plurality of address components. In the present specification, this database is referred to as a 'field database'. As exemplified in FIG. 4, the field databases are individually configured in a form 40ᵢ, (i=1,2,3,..) in which many pieces of address information corresponding to preassigned address component are registered in alphabetical order. A piece of the address information in the field database is referred to as 'component entry'. For address information that is duplicated nationwide for the corresponding address component, naturally only one component entry is listed. In the diagram, each component entry is illustrated as a tree structure branching from each syllable, but depending on the search method used for the field database, a field database may be constructed with component entries each of which is listed in a form that includes all syllables.

In addition, field databases, excluding the 'City/Province' field database 40₁ which corresponds to the top level in the address system, are configured with all component entries listed regardless of hierarchical status in the address system. For example, in the 'City/County/District' field database 40₂ and the 'Street Name' field database 40₃, component entries of 'City/County/District' belonging to all cities/provinces nationwide and component entries of all 'Street Names' nationwide are registered, respectively.

The element processing unit 12 searches (p41ᵢ, i=1,2,3,..) the field databases 40ᵢ in a predetermined order for the input target string 411 to check if there is a string that completely matches it. In each search process, since the component entries in the field database are separated by syllable, the target string is compared syllable by syllable from the beginning, and if it matches up to the last syllable of the component entry, the part of the target string up to the matched part is determined as the value for the address component of the corresponding field database. If it matches partially, the partial match information is temporarily recorded. The partial match information includes the index for the corresponding field database and the corresponding component entry, the number of matched syllables (or mismatched syllables), etc.

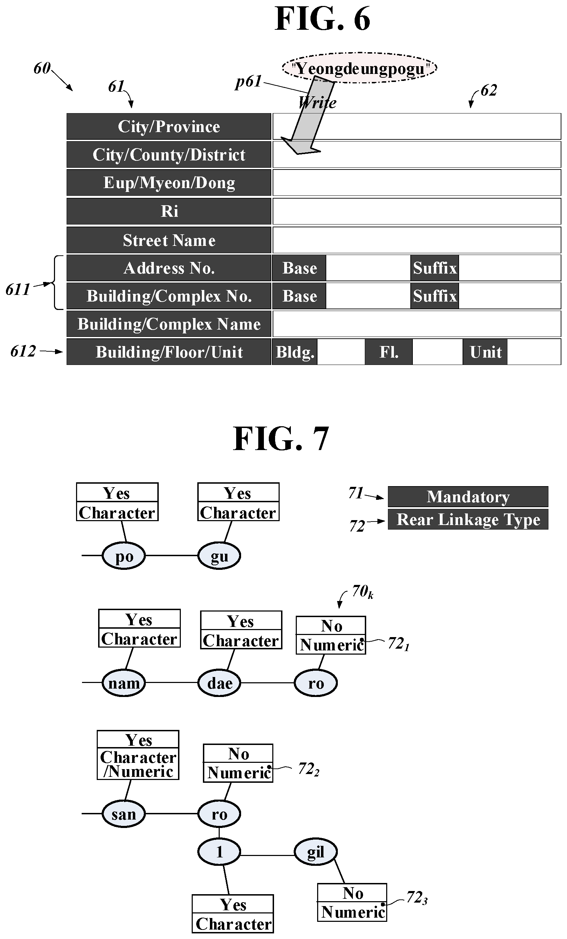

In the process of comparing at the syllable level, if a syllable of the component entry is a number, for example, '1' in the entry of consecutive "Dang", "san", "ro", "1" and "gil," the element processing unit 12 compares and verifies whether the positionally corresponding syllable in the target string is 'il', the phonetic representation of the number '1'. In the search process, comparison of such numbers of phonetic characters is also included in the search of the RAD 13 by the main processing unit 10. For the component entry, as exemplified in FIG. 7, each syllable contains pre-written attribute information 70ₖ, and the rear linkage type 72 of this attribute information indicates what type of character follows in the next syllable. Therefore, by referring to this attribute information, it is determined whether to compare the phonetic character for a number with the syllable of the target string.

In the case that the rear linkage type attribute for the last syllable of a component entry is set to 'numeric' 72ᵢ, (i=1,2,3,..), when searching other field database of an address component immediately following the corresponding field database in the address system, the matching component entry is found by comparing the phonetic characters representing numbers with the syllable of the target string if the beginning of the target string does not match the component entries of the following field database.

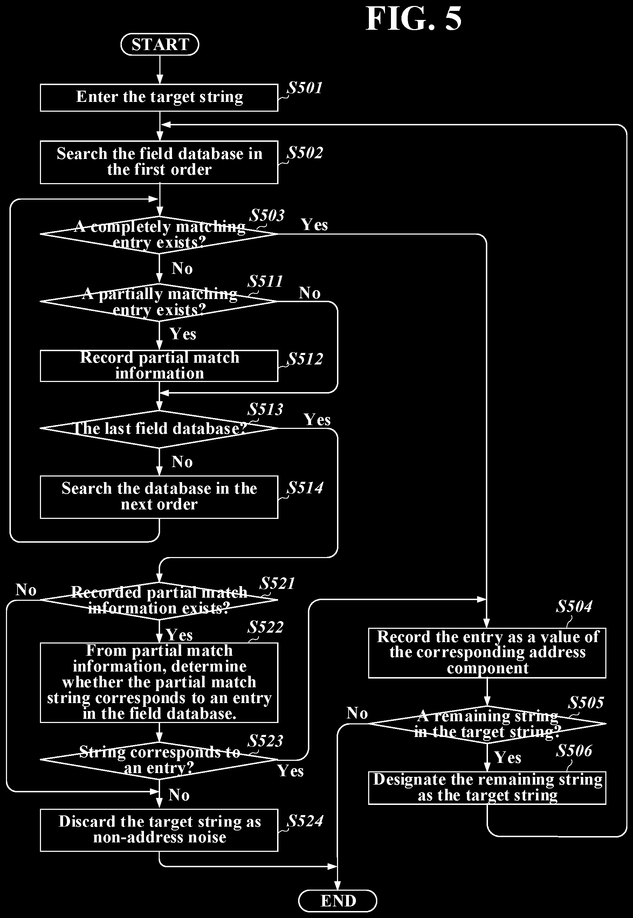

FIG. 5 is a flowchart that exemplarily illustrates the process by which the element processing unit 12 processes an input target string to map it to the value of an address component. With reference to the flowchart of FIG. 5, the operation of mapping a target string, which is described in a general manner, to the value of an address component will be explained in detail.

When a target string is input (S501), the element processing unit 12 selects each field database sequentially according to a predetermined order (S502), and searches the currently selected field database for a component entry matching the starting part of the target string or the entire target string (S503). If there is a completely matching entry 411a, the component entry 411a is written in the matching table as a value for an address member 402 associated with the field database, thereby mapping the matched component entry to an address component (S504).

FIG. 6 illustrates the matching table 60 structured according to an embodiment of the present invention, in which each matching component entry of a field database is written. The matching table 60 is composed of address members 61 corresponding to a address component set, which are the basic units constituting an official address, as illustrated, and fields 62 in which address values for the members, i.e., information on a part of the address for the corresponding address component, are recorded. Some of the members 611 and 612 may be composed of a plurality of sub-members as illustrated.

The matching table 60 is also shared with the main processing unit 10, and the element processing unit 12, after writing (p61) a component entry confirmed to be a match through a search of the field database into the corresponding address member of the matching table 60, notifies the main processing unit 10 of this writing. The actions performed by the main processing unit 10 upon receiving the notification that the value for a new address member has been filled in the matching table 60 will be described later.

In the search process of each field database described above for a target string, if there is a component entry (S511) that does not match up to the end of its syllables but partially matches, the partial match information with that component entry is recorded as described above (S512). If a field database in the next sequence exists (S513), the search operation for that field database is continued, and if it is the last field database, it is checked whether there is recorded partial match information for the current target string (S521). If there is no recorded partial match information, the element processing unit 12 considers the current target string 411b as NAN and discards it (p43). Accordingly, next selection of strings contained in the voice text is performed.

If there is recorded partial match information, the element processing unit 12 determines whether the partially matched string actually corresponds to the value of the component entry, that is, the address component, by referring to the partial match information (S522). To do this, first, the attributes of the remaining mismatched syllables of the partially matched component entry are checked. FIG. 7 illustrates an example in which attribute information 70ₖ is pre-set for each syllable of each component entry in the field database. This attribute information 70ₖ is composed of a field 71 indicating whether the corresponding syllable is a mandatory match, and a rear linkage type field 72 indicating whether the syllable or address component following the corresponding syllable is a numeric or a character. The rear linkage type field may be set for the corresponding component entry rather than for each syllable unit.

The element processing unit 12 determines that the matched part in the target string corresponds to the component entry if all remaining syllables not compared in the component entry have non-mandatory values ('mandatory'='No'). When it is determined that it corresponds to the component entry (S523), as described before, that component entry is written in the matching table 60 as the value of the corresponding address member (S504). If any remaining not-compared syllable in the partially matched component entry is designated as 'required' in its attribute like 'mandatory'='Yes', the current target string is considered as NAN and discarded (S524).

After writing the matched component entry as the value of the corresponding address member of the matching table 60, the element processing unit 12 checks whether the string excluding the part used for mapping of the component entry remains in the target string (S505), and if there is no remaining string, it completes the processing for the current target string and repeats the process described above for the next input target string.

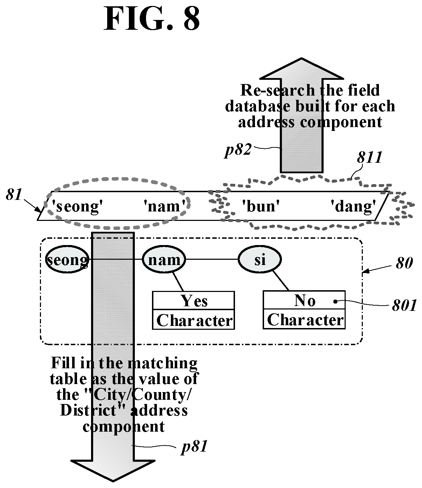

If there is a remaining string, the element processing unit 12 performs the aforementioned process of searching the field databases in order using the remaining string as a target. FIG. 8 specifically illustrates an example of the case in which this process is performed. In the illustrated example, the target string consists of syllables 81 of "seong", "nam", "bun" and "dang", and in the state (p81) that the consecutive syllables of "'Seong" and "Nam" are determined to correspond to the component entry "Seongnam-si" (80) registered in the field database of 'City/County/District' (due to the last syllable 'si' having an optional attribute value ('Mandatory'='No') (801)), they are written in the corresponding address member of the matching table 60, and the remaining syllables that was not used for partial matching in the target string 81 are shown as "bun" and "dang".

In this state, the element processing unit 12 performs the aforementioned process of finding the corresponding component entry by searching (p82) each field database using the remaining string 811 of "bun" and "dang" within the target string as another target.

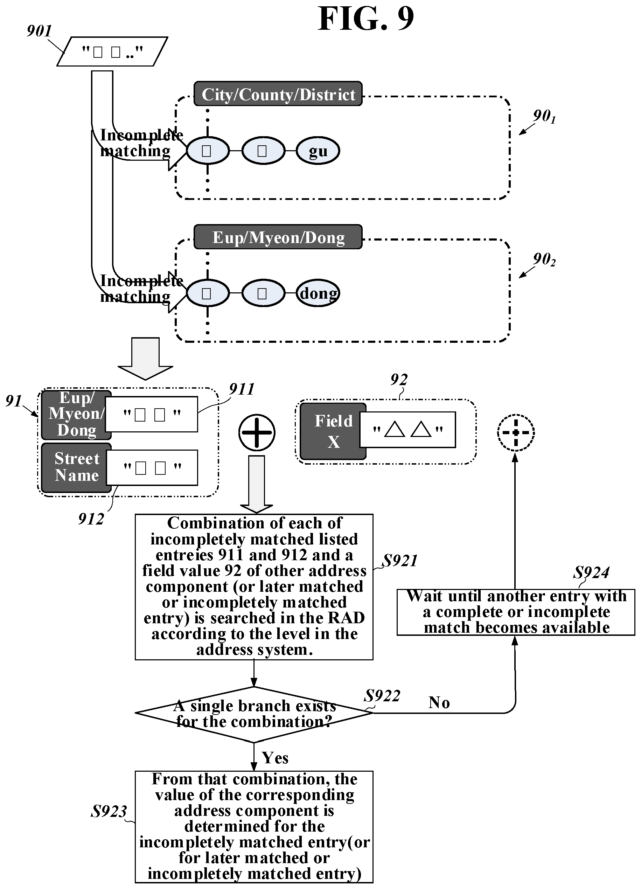

In the above-described embodiment, if there are multiple component entries that can be mapped to the value of the corresponding address component due to partially matching, the element processing unit 12 records a temporary value for an unidentified address component with respect to the corresponding target string or the part of the partially matched string, and selectively maps the temporary value to the address component based on the values of the address members currently filled in the matching table 60, or the values of the address component determined or identified from another target string or remaining string. FIG. 9 schematically illustrates an example of this mapping method, and this method will be explained in detail with reference to FIG. 9.

If there are component entries, which are not completely matched with the current target string or part thereof 901, in multiple field databases 90₁ and 90₂, each information 911 or 912 (hereinafter referred to as 'entry candidate information') regarding the address component associated with the field database and the component entry that is not completely matched is configured as an undetermined element list 91.

Then, it is checked whether there is any address member in the matching table 60 in which the currently-identified address value is written. If there is no address member in which the address value is written, processing of the entry candidate information is delayed until a completely matching or incompletely matching component entry is found from the next input target string according to the method illustrated in the flowchart of FIG. 5.

When there is an address member with a value written in the current matching table 60, or when a new completely matching or incompletely matching component entry is determined, the element processing unit 12 searches (S921) the RAD to check whether there is an address record that matches each corresponding address field combination, which means information regarding multiple address components combining the corresponding address component and its value 92 (or entry candidate information that is not mapped to an address component due to incomplete matching with a component entry), and the respective entry candidate information 911 or 912 of the above-mentioned undetermined element list 91. In the following, the value of the address component and the entry candidate information are collectively referred to as 'additional field information'.

The search at this stage is conducted according to the system of official address. That is, this search contains finding corresponding entry candidate information with respect to the address field combination to be searched, by targeting address components from the higher level down to the lower level in the address system.

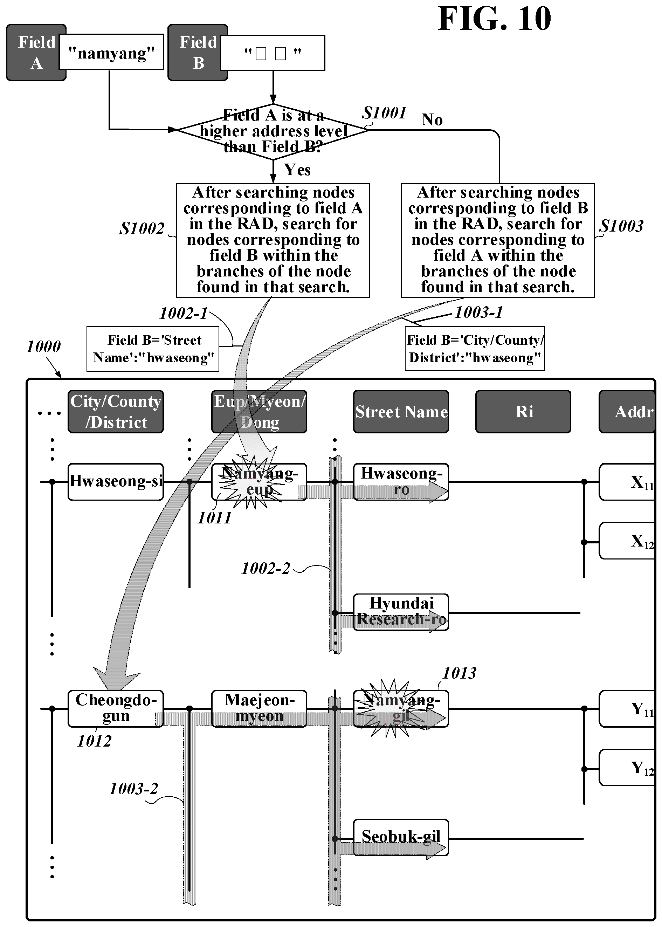

FIG. 10 schematically illustrates this process along with the schematic structure of the RAD 1000.

For example, in the assumption that the entry candidate information of the undetermined element list 91 is "Namyang" in the 'Eup/Myeon/Dong' and 'Street Name' field databases, respectively, if the additional field information is "Hwaseong" (1002-1) in the 'Street Name' field database as illustrated in FIG. 10, the entry candidate information of 'Eup/Myeon/Dong' is identified as having a higher address level than the additional field information of 'Street Name' in the comparison of address levels between fields (S1001), so a search is performed to see if there is a node (refers to an item of field value filled for each address field of the address records registered in the RAD) that matches the additional field information (S1002) by targeting each of branches 1002-1 below the 'Eup/Myeon/Dong' address field 1011 of the RAD 1000 coinciding with that entry candidate information. In this specification, a block of address information corresponding to branches following an arbitrary node in which an arbitrary value is recorded for a corresponding address field, is hereinafter referred to as a 'coverage zone' of the arbitrary node.

Since another entry candidate information of 'Street Name' conflicts with the additional field information, the search for it is omitted.

In searching the branches 1002-2 on the coverage zone starting from the above 'Eup/Myeon/Dong' node 1011 (which refers to an item of an address record, i.e., node, where an arbitrary value related to the 'Eup/Myeon/Dong' address field is filled; it will be expressed in the same way below), if only one node, i.e., one branch that matches the additional field information is found (S922), the field value of the corresponding node 1011, i.e., "Namyang-eup" for 'Eup/Myeon/Dong', is mapped for the undetermined element list 91 (S923).

Since the address level of the additional field information is higher if the additional field information is "Cheongdo" of the 'City/County/District' (1003-1), the nodes containing "Namyang" of the 'Eup-Myeon-Dong' and "Namyang" of the 'Street Name' of the first entry candidate information are searched for on the branches 1003-2 of the coverage zone starting from the node 1012 of the RAD 1000 coinciding with that additional field information. In this search process, if only one node 1013 is found (S922), the element processing unit 12 maps the field value of the corresponding address node, that is, "Namyang-gil" of the 'Street Name', for the above undetermined element list 91 (S923).

The fact that only one lower node 1013 is found in the coverage zone by the upper node 1012 means that, in the address records containing the upper node 1012, all the nodes having the field value of the lower node 1013 have the same field value for the address field between the upper and lower nodes 1012 and 1013.

In this process of determining an address component for an undetermined element list 91, if additional field information is also entry candidate information that has not been determined as an address component, this entry candidate information is also mapped to the value of the corresponding address component (S923).

If it is confirmed that there are multiple branches in the search of the above-mentioned RAD 1000, the element processing unit 12 determines the corresponding address component for the undetermined element list 91 through the process of checking whether there is a single branch connecting every relevant node using another piece of additional field information.

For example, assuming that "Namyang-ro" is included as a 'Street Name' node below "Namyang-eup" node 1011 and the additional field information is "Hwaseong-si" of the 'City/County/District', in the search of the RAD 1000 at this time, the branch connecting "Hwaseong-si" of the 'City/County/District' node and "Namyang-eup" of the 'Eup/Myeon/Dong' node, and the branch connecting "Hwaseong-si" of the 'City/County/District' node and "Namyang-ro" of the 'Street Name' node are each confirmed. Therefore, in this case, the address component is not determined for the undetermined element list, and another piece of additional field information is used for determination.

When an undetermined element list is determined to a single address component, the element processing unit 12 records the value in the corresponding address member of the matching table 60 as described above, and notifies the main processing unit 10 that a new address member has been filled.

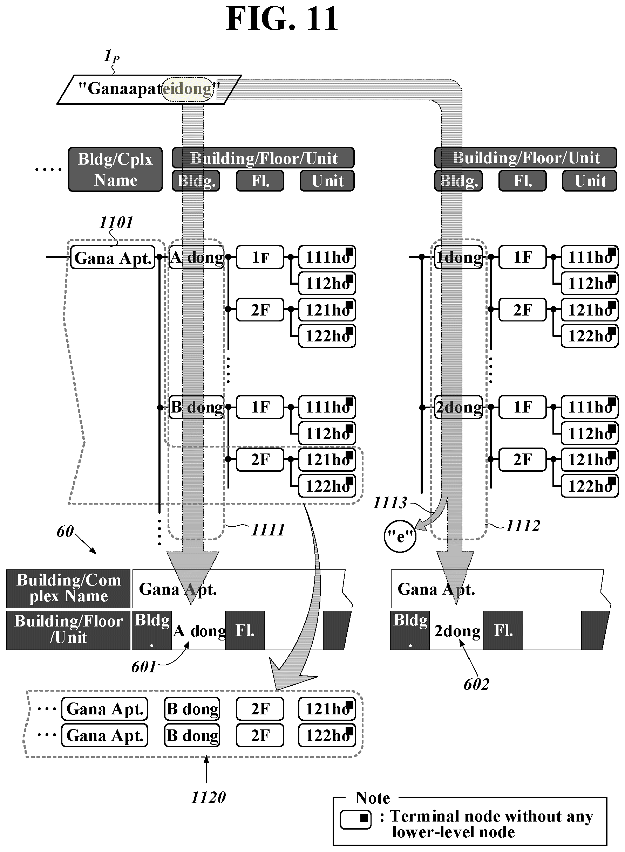

In one embodiment according to the present invention, by referring to the information registered in the address record of the RAD 1000, the phonetic characters for a special target string, e.g., an alphabet, etc., may be corrected and written in the matching table 60 as information for the corresponding address component. FIG. 11 illustrates different cases of address records for a part of the RAD 1000 to schematically show the method according to the present embodiment.

For convenience of explanation, in the related drawings, the address records of the RAD 1000 are all depicted in a format where address fields with the same value share a single node, and branches diverge when the field value changes; however, the address records of the RAD 1000 do not necessarily have to be structured in this manner. The RAD 1000 may be structured and used in a manner (1120) in which the values of all corresponding address components for each address record are recorded, as partially exemplified in the drawings. In such a case, as previously mentioned regarding the field database, a search method suitable for such structure is applied, or a separate search database consisting of nodes and branches may be created for use from the RAD in order to apply the search method described below.

When applying the following description to an embodiment where a RAD is constructed with address records in which the values of all relevant address components are recorded, a node at any address level should be understood as representing the same field values as a single unit within the range defined by the node at the immediately higher address level.

As shown in the example of FIG. 11, when the currently entered target string is "Ganaapateidong" 1_{P}, the leading part of "Ganaapat" is determined to the value of the 'Building/Complex Name' address component in the search for the 'Building/Complex Name' field database, and is written in the corresponding address member of the matching table 60. The remaining string "eidong" is then compared with the 'Dong' nodes covered by the determined 'Building/Complex Name' node 1101. At this time, if the field values of the corresponding 'Building' node contain an alphabet (1111), the element processing unit 12 compares the 'Building' name (e.g., "Eidong", "Bidong", etc.) with the phonetic characters, for example "Ei", "Bi", etc. for the alphabet of each 'Building' node at the beginning. Accordingly, the remaining string "eidong" is mapped to "A dong" of the 'Building' node on the corresponding address branch. After the element processing unit 12 corrects the remaining string "eidong" to "A dong", it fills (601) the mapped value in the 'Building' address member of the matching table 60.

If the field values of the corresponding 'Building' node contain numbers (1112), the element processing unit 12 compares with 'Building' names ("Ildong", "Idong", etc.) with the phonetic characters of each number at the beginning. Accordingly, it is confirmed that "Idong" in the remaining string "eidong" matches the building name with the phonetic character "i" of number '2' placed at the beginning, so "eidong" is corrected to "2dong" and written in the corresponding address member 602 of the matching table 60. The preceding "e" that does not match in the remaining phrase is ignored (1113). As in this example, determining only the matching part as an address component, even though the string is partially matching, is based on the fact that, in the case of address information following the building/complex name, the information usable to refer to its building is very limited to number, alphabet, or single syllables such as "Ga" "Na" and "Da", etc.

As such, when people speak an address, even if single-syllable minor sounds uttered between address information, such as "e", "eh", "um", "hmm", "uh", etc. are not separated into a single target string and are included in the address information of the target string, they are removed through comparison with the RAD storing refined official address records, so the efficiency of extracting official address is greatly improved even for target strings containing NANs caused by various unpredictable minor sounds.

The operation of changing the phonetic characters of the alphabet, etc. included in a target string to the corresponding alphabet may be performed by the main processing unit 10 instead of the element processing unit 12. In this case, the target string containing the phonetic characters of the alphabet, etc. will be processed by the main processing unit 10 after being written in the corresponding address member of the matching table 60.

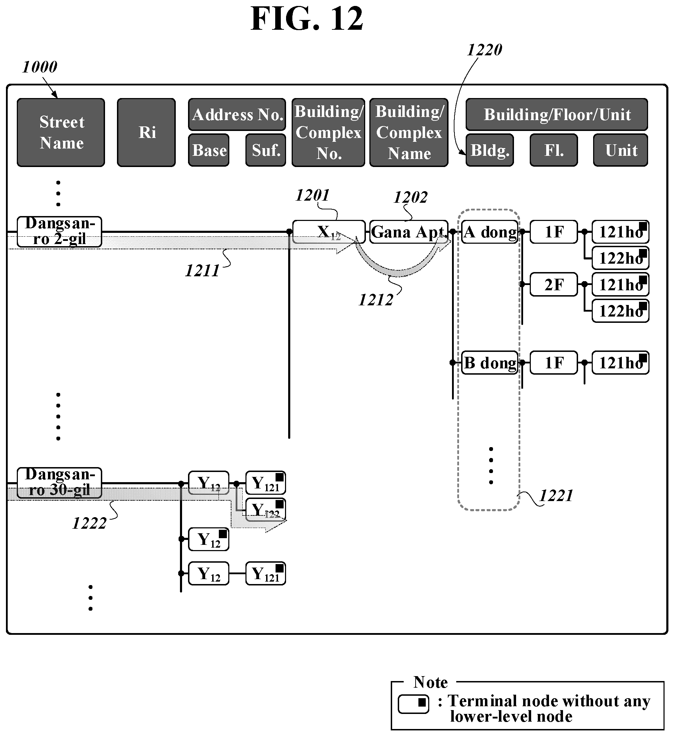

Meanwhile, when the element processing unit 12 notifies that a new address member has been filled in the matching table 60, the main processing unit 10 checks whether the values filled in at least some of the address members of the matching table 60 complete a single official address. This verification of address completeness is achieved by comparing the values currently written for the address members of the matching table 60 with the nodes of the RAD 1000. In the process of comparing with the nodes of the RAD 1000, if a single address record is confirmed by starting from the top address level and following the branches by each matching node to reach (1222) the node at the end of the branch in the RAD as exemplified in FIG. 12, the address information currently filled in the matching table 60 is determined as a single complete official address.

The fact that a single address is confirmed means that a single record, which contains all current address information written in the matching table 60 as individual field values corresponding to each address field, exists in the RAD.

In one embodiment according to the present invention, even if a new address member is notified, the process of checking whether the address information written in the current matching table 60 completes an official address may be selectively performed. For example, the main processing unit 10 performs an operation to check whether the official address is completed by comparing with nodes on the RAD only when at least one value for the address members of 'Street Name', 'Building/Complex Name', and 'Address Number' is filled, and if no value is filled for any of these members, the completion status of official address is not checked.

During the process of scanning the branch along the nodes that match the values of the address members in order to check whether the official address is complete, if there is no branch diverging from the node confirmed to be currently matching when there is no value of the address members filled in the matching table 60 corresponding to the node at the current address level, a comparison is performed for the next node. For example, in the case (1211) that the branch set made based on nodes matching from the top level extends to the 'Building/Complex Number' node 1201, for the current address information filled in the matching table 60, since no branch diverges from that 'Building/Complex Number' node even if there is no value of the address member in the matching table 60 corresponding to the 'Building/Complex Name' node 1202, the main processing unit 10 skips (1212) the lower node 1202 and compares the field values 1221 of the next field 1220 with the value of the address member in the matching table 60 corresponding to that field 1220.

Of course, if there is a node where a branch diverges in the middle, the main processing unit 10 checks whether there is a value of a corresponding address member in one or more of the diverged branches, that is, a coverage zone defined from the node at the currently matched last address level, starting from the next node belonging to the coverage zone. In this process of scanning the coverage zone, if a node at the same address level matching the value of the address member is found in only one branch, the node search continues from the next node, and if matching nodes are found in multiple branches, it is determined that the current address information filled in the matching table 60 does not complete an official address.

Meanwhile, in the process of comparing along the branches of the matching nodes as described above, when skipping a node where the branch does not diverge as previously explained, the field value of the skipped node, "Gana Apt." which is the field value 1202 of the 'Building/Complex Name' node in the example of FIG. 12, is written in the "Building/Complex Name" address member of the matching table 60.

In addition, even though the skipped node is in one of the diverged branches, if there is only one node, in one or more diverged branches, that matches the value for the address member of the lower address level, the field values of the one or more skipped nodes on the branch leading to that one node are written in the corresponding address members of the matching table 60. That is, the value for another address member with no address information in the matching table 60 is automatically determined.

The fact that there is only one node, in one or more diverged branches, which matches the value for an address member of the lower address level means that address records, which have the field values of both matching nodes for the corresponding address fields, and to which the coverage zone originating from the node at the higher address level among both nodes belongs, have identical field values for the address fields between the both fields for both matching nodes.

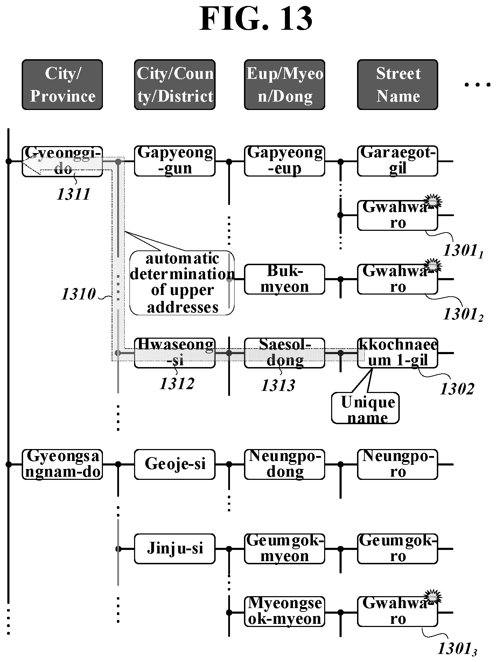

The automatic determination for empty address member, where a value is not entered in the matching table 60, applies not only to skip between nodes, but also to the upper nodes of any node when it is specified in the RAD 1000. FIG. 13 schematically illustrates an example of this.

In the case that the highest address level is the 'Street Name' address member among the address members where the current values are filled in the matching table 60, and a node 1301₁ is specified due to that highest member's value of "Gahwa-ro", if the same name 1301₂ is found in the 'Street Name' node of other branches diverging from the upper nodes of that node 1301₁, the values of other address members up to the top address level are not automatically determined. If the value of the 'Street Name' address member is "Kkotnaeeum 1-gil" and is unique among the branches diverging from the upper nodes starting from the corresponding node 1302, the field values of nodes 1311, 1312 and 1313 in the branch set 1310 that reaches up to the top address level are written in the matching table 60 as the values of the corresponding address members, thereby automatically determining the values of other empty address members.

If the value of the address member of the current highest address level in the matching table 60 does not correspond to a node on at least one specific branch in the RAD 1000, the main processing unit 10 checks whether there is a matching node among all the nodes in the RAD corresponding to the address member, and if there is a single matching node, the values for the upper address members are automatically determined as described above. For example, when searching the RAD 1000 for the value of the first written address member in the state where there is no information filled in the matching table 60, if that address member is not the top address level, a search is performed on all the nodes corresponding to the address level.

In one embodiment according to the present invention, in the case of a specific address member, for example, a 'Building/Complex Name' address member, if the condition is that the address information currently filled in the matching table 60 does not correspond to one or more specific branches, all of 'Building/Complex Name' nodes in the RAD 1000 may be searched to see if there is a node having the same field value. Of course, if one or more branches starting from the top level are determined by the current address information in the matching table 60, the search is performed only on the 'Building/Complex Name' nodes belonging to the coverage zone specified based on the last matching node of that branch.

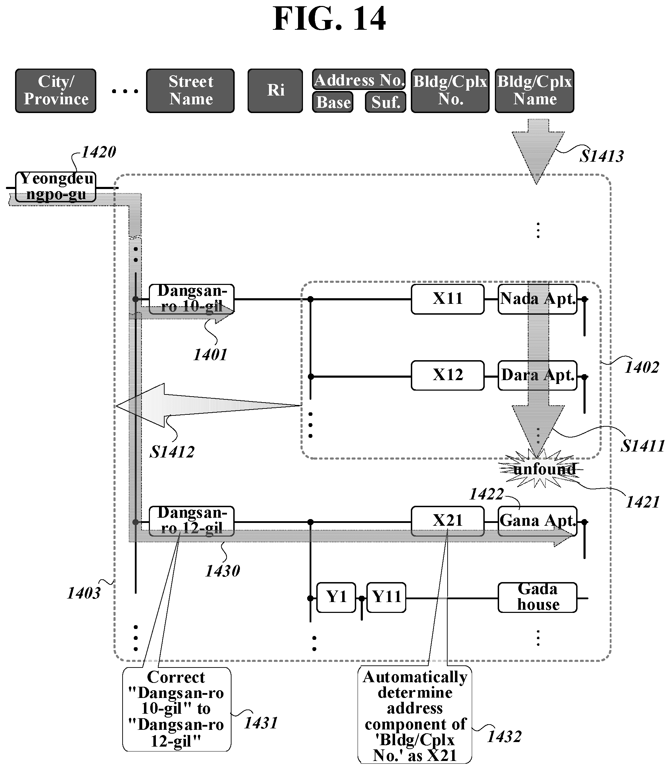

In one embodiment according to the present invention, with respect to a specific address component, for example, a 'Building/Complex Name' address component, if a node with a matching field value is not found in the coverage zone by the last matching node of the currently confirmed branch set in the RAD 1000, a matching node may be searched in a wider address range. FIG. 14 is a diagram illustrating an exemplary search method according to the present embodiment.

In the condition that the branches 1401 are determined up to the 'Street Name' node by the address information of the current matching table 60, when a new value is written in the address member of 'Building/Complex Name' in the matching table 60, the main processing unit 10 checks (S1411) whether there is a node that matches the new value of the address member among the field values of the 'Building/Complex Name' address field, with the coverage zone 1402 specified by the current branches as the search range. If, in this search (S1411), no node with a matching value is found (1421), the main processing unit 10 expands (S1412) the search range.

The expansion of the search range may involve raising the address level by one or two steps from the currently confirmed branches 1401 to determine the corresponding coverage zone. For example, for the branches 1401 confirmed up to the 'Street Name' node, the search range can be expanded to the coverage zone 1403 determined by the 'City/County/District' node 1420, which is the higher address level on those branches.

In case of an address component for which the search range expansion is not permitted, if no node with a matching field value is found in the corresponding coverage zone, the value written for that address member is deleted from the matching table 60.

After the main processing unit 10 expands the search range as mentioned above, it checks (S1413) whether there is a match with the value of the address member among the field values of the 'Building/Complex Name' address field within the expanded range 1403. In the example of FIG. 14, assuming that the value of the currently written address member is "Ganaapat", a node with a matching value is not found in the search (S1411) for the first specified coverage zone 1402, but a node 1422 with a matching value is found in the search (S1413) for the expanded coverage zone 1403.

Thus, when a node 1422 matching the value of the 'Building/Complex Name' address member is found in an expanded coverage zone 1403 other than the first coverage zone 1402 by previously confirmed branches 1401, the main processing unit 10 changes or automatically determines the values of the corresponding address members in the matching table 60 so that they correspond to the new branches 1430 on the changed path leading to the found matching node 1422. In the example of the drawing, since it is assumed that the value of the 'Street Name' address member is filled in the matching table 60, this value is replaced (1431) with the field value of the 'Street Name' address field on the newly determined branches 1430, and if the 'Building/Complex Number' address member is empty, the field value of the 'Building/Complex Number' node on the branches 1430 corresponding to the changed path is automatically determined and written in the matching table 60. Although not illustrated in the drawing, if the existing branches 1401 have been set up to the 'Address Number' node, the 'Address Number' member will also be corrected to the field value (this value may not be assigned.) of the 'Address Number' node on the newly set branches 1430.

The reason for changing the value of a higher-level address component based on the value assigned to a specific address component, such as a 'Building/Complex Name,' is that information regarding such specific address component is closely related to people's daily lives; therefore, memories of it are much more accurate than those of other address components, such as address number or street name containing a number.

As described above, while searching the RAD 1000 for the values of one or more address members filled in the matching table 60 and selectively automatically determining the values for other address members that are not entered by the target string, if a branch extending from a node at the top address level to one terminal node is determined by the current address information filled in the matching table 60, the main processing unit 10 determines the official address for the target string 1 or 1ᵢ (i=1,2,3,..) entered or currently being entered, records the determined official address in a file of a pre-designated storage, or composes it into a message according to a predetermined communication protocol and transmits the message to a pre-designated server. At this time, the pre-designated server to which the message is forwarded may be the server that transmitted the target string.

Meanwhile, when the official address is determined for the address information filled in the matching table 60, the main processing unit 10 notifies the preprocessing unit 11 of this determination. Upon receiving this notification, the preprocessing unit 11 terminates the processing of the current target string and waits until the next target string is entered, or proceeds to the processing of the next target string.

Unless the various embodiments, for method and device for determining address from text extracted from voice, described so far are incompatible with each other, the explained embodiments can be properly chosen in various ways and then combined to embody the concept and idea of the present invention.

The embodiments of the present invention described above have been introduced for the purpose of illustration; therefore, it should be understood by those skilled in the art that modification, change, substitution, or addition to the embodiments is possible without departing from the technical principles and scope of the present invention defined by the appended claims.

## Claims

1. A method for determining address information by receiving information of a text as input, comprising:
a first step of separating the text into one or more target strings based on a specific delimiter;
a second step of selectively mapping each of the separated one or more target strings to an address value of a corresponding address component in a pre-specified address member set according to results of searching a plurality of field databases, each composed of a set of address values corresponding to one of a plurality of address components; and
a third step of, when an arbitrary target string is mapped to an address value in the second step, searching one or more address values currently mapped to the address member set in an address database, and determining, based on the search result, that the one or more address values correspond to complete information of a single address.

2. The method of claim 1, wherein the third step proceeds to the first step if it is determined that the one or more address values do not correspond to complete information of a single address, or is performed again if another target string following the arbitrary target string is mapped to an address value in the second step.

3. The method of claim 1, wherein the second step selectively maps the one or more target strings to address values of a plurality of corresponding address components when a single target string among the one or more target strings partially matches a first entry registered in one of the plurality of field databases.

4. The method of claim 3, wherein the second step maps the single target string to address values of corresponding multiple address components when a remaining string, excluding a part of the single target string that partially matches the first entry, matches at least partially with a second entry registered in another field database among the plurality of field databases.

5. The method of claim 4, wherein the second step maps the single target string to address values of a plurality of corresponding address components when all of address records, among address record set in the address database having a field value for a first address field corresponding to an entry of higher-level in address system in both of the first and second entries, have the same field value for every address field between the first and a second address field, wherein the address records have a field value for the second address field corresponding to an entry of lower-level in address system in the both entries.

6. The method of claim 4, wherein the second step uses a part of the remaining string, excluding another part thereof, for mapping to address values of the multiple address components, when the another part matches the second entry itself, or the second entry of which number or alphabet has been replaced with phonetic characters thereof.

7. The method of claim 1, wherein the second step discards a single target string among the one or more targets without mapping to an address value, if at least one syllable mismatched in an entry is designated as mandatory for the entry when the single target string partially matches the entry registered in one of the plurality of field databases.

8. The method of claim 1, wherein the second step discards a single string among the one or more target strings without using it for mapping to an address value when the single string matches a non-address word listed in a pre-set list.

9. The method of claim 1, wherein the second step selectively changes phonetic characters for a number included in a single target string among the one or more target strings into a number based on attribute information preassigned to a syllable of a specific entry in a specific field database that is being compared with the single target string, and maps the changed number to an address value of an address component corresponding to the single target string.

10. The method of claim 1, wherein the second step selectively changes phonetic characters for a number included in a single target string among the one or more target strings into a number based on attribute information preassigned to a last syllable of a specific entry in a specific field database with which a target string immediately preceding the single target string is matched, and maps the changed number to an address value of an address component corresponding to the single target string.

11. The method of claim 1, wherein the third step determines that one or more address values currently mapped to the address member set correspond to address information of one address record when only the one address record among address records registered in the address database contains all of the one or more address values.

12. The method of claim 1, wherein the third step automatically maps a mutually identical field value for one or more address fields to an address value of a corresponding address component in the address member set, when a first and a second field value, which respectively match a first and a second address value included in the one or more address values currently mapped for the address member set, for a first and a second address field of different address levels with one or more address fields in between exist in the address database, and all address records having the first and second field values for the first and second address fields have the mutually identical field value for each of the one or more address fields.

13. The method of claim 1, wherein the third step automatically maps a mutually identical field value for at least one address field to an address value of a corresponding address component in the address member set, when a specific field value, which matches an address value of highest address level among the one or more address values currently mapped for the address component set, for an arbitrary address field not corresponding to top address level exist in the address database, and all address records having the specific field value for the arbitrary address field have the mutually identical field value for each of the at least one address field of an address level higher than the arbitrary address field.

14. The method of claim 1, wherein the third step additionally searches for a first address value in a specific range determined based on an upper address field higher than a specific address field in terms of address level if the first address value being searched is for a specific address component and is not found in the specific address field corresponding to the specific address component, when searching the address database for the one or more address values.

15. The method of claim 14, wherein the specific address component includes an address component corresponding to a 'Building/Complex Name' in address system.

16. The method of claim 14, wherein the third step changes at least one address value, among the one or more address values, whose address level is higher than that of the first address value when the first address value is found in the specific range.

17. The method of claim 1, wherein, if a field value recorded in an address field within a specific range contains a number or an alphabet, the third step checks whether a first address value matches the field value of which the number or the alphabet is replaced by phonetic characters of the number or the alphabet, when searching the address field within the specific range in the address database for the first address value included in the one or more address values.

18. The method of claim 14 or 17, wherein the specific range is a section of the address database specified by address records in which a field value identical to an address value, among the one or more address values, of an address level higher than that of the first address value is recorded in an address field.

19. The method of claim 1, wherein the third step does not perform an operation of searching the address database for the one or more address values, if an address value corresponding to a predetermined address component among address components defined by address system is not included in the one or more address values when the arbitrary target string is mapped to an address value.

20. The method of claim 1, wherein the predetermined address component includes at least one of address components corresponding to 'Street Name', 'Building/Complex Name', and 'Address Number' defined by the address system.

21. The method of claim 1, wherein each of the plurality of field databases is configured such that all address information nationwide assigned to a corresponding address component is sorted in alphabetical order without duplication.

22. The method of claim 1, further comprising a step of transmitting the one or more address values that are determined to correspond to complete address information to another device other than a device performing the method, wherein the text is received via communication from the another device.

23. The method of claim 1, wherein the text is extracted from voice of a conversation taking place on electrical communication.

24. A device for determining address information by receiving information of a text as input, comprising:
a first processing unit configured to separate the text into one or more target strings based on a specific delimiter;
a second processing unit configured to selectively map each of the separated one or more target strings to an address value of a corresponding address component in a pre-specified address member set according to results of searching a plurality of field databases, each composed of a set of address values corresponding to one of a plurality of address components; and
a main processing unit configured to, when an arbitrary target string is mapped to an address value by the second processing unit, search one or more address values currently mapped to the address member set in an address database, and to determine, based on the search result, that one or more address values correspond to complete information of a single address.
